# EUROPEAN PATENT APPLICATION

(11) **EP 1 717 349 A1**
(43) Date of publication of application: **02.11.2006**
(21) Application number: 04721355.8
(22) Date of filing: 17.03.2004
(51) Int. Cl.: C23F 11/00, B05D 7/24

(54) **PROTECTIVE FILM AGENT AND METHOD FOR FORMING PROTECTIVE FILM**

(30) Priority: 20.02.2004 WO PCT/JP2004/002031
(71) Applicant: Amano, Shigehisa, Toyota-shi, Aichi 4442203 (JP)
(72) Inventor: Amano, Shigehisa, Toyota-shi, Aichi 4442203 (JP)
(74) Representative: Senior, Alan Murray
(86) International application number: PCT/JP2004/003594
(87) International publication number: WO 2005/080636

(57) **Abstract**

A protective film agent (M) and a method of forming a protective layer in which the protective film agent (M) is applied to an outer surface of a die mold (9), or applied to an outer surface of the die mold (9) except for a cavity (10) resides. The protective film agent (M) has a liquid mixture prepared by urethane methyl-ethyl ketone and ethyl acetate. A curability enhancement is prepared by an isocyanate-based compound and ethyl acetate. A protective film agent (M) tightly covers the outer surface of the die mold (9) as a protective layer (11), and protects it against the rust, soil and damage. The protective layer (11) has a heat-resistant temperature (around 100°C), and withstands against the operating temperature of 70-80°C , to which the protective layer (11) is subjected at the time of implementing the die forging procedure. A flake-resistance and crack-resistance are improved against an impact, thereby protecting the protective layer (11) against cracks and nicks supposed to occur when the die mold (9) collides with other member.

## Description

### FIELD OF THE INVENTION

The invention relates to a protective film agent and a method for forming a protective layer which protects items such as forging or casing die mold against the rust, soil and damage while storing the items when storing them.

### BACKGROUND OF THE INVENTION

A rust protecting agent and method has been contrived to protect a die mold which molds synthetics, rubbers and metallic material as disclosed by Japanese Laid-open Patent Application No. 2000-289036. The rust protecting agent is a mixture of a rubber material (e.g., natural rubber, isoprene) and a hydrocarbon-based solution (organic solution). With the rubber material serves as a basic element, the rust protecting agent is coated over an entire surface of the die mold as an anti-rust layer during the time period in which the die mold is stored.

Since the rust protecting agent runs into a cavity provided on the die mold to accept a molding material, it is necessary to remove the anti-rust layer in use from the outer surface of the die mold in which the cavity is provided.

Considering that the anti-rust layer partly adheres to the die mold each time when a molded product is pulled out of the cavity at the time of implementing the die forging procedure, it was found that the repetitive die forging procedures provide a transfer phenomenon to finally remove the anti-rust layer from the die mold.

The rust protecting agent prepared by the above Japanese Laid-open Patent Application No. 2000-289036, however, has many constituents and complicates the procedures needed to determine the mixing rato of the basic element and the organic solution. This makes it cumbersome, time-consuming and costly to prepare the rust protecting agent by mixing its constituents, thus making it difficult to meet the need from the users.

Therefore, it is an object of the invention to overcome the above drawbacks, and provide a protective film agent and a method for forming the protective layer which is capable of tightly coating an outer surface of an item to be protected with an appropriate hardness insured, so as to effectively protect the item against the rust, soil and damage.

It is other object of the invention to provide a protective film agent and a method for forming the protective layer which is capable of preparing a protective layer with simplified constituents, thus making it advantageously ready and cost-saving to mix the needed constituents.

### DISCLOSURE OF THE INVENTION

(1) According to the invention, there is provided a protective film agent applied to an outer surface of an item to be protected, otherwise the protective film agent is applied to a regional outer surface of the item except for a specified portion of the item to be protected, so as to form a protective layer.
   The protective film agent has a urethane liquid mixed with a urethane-based cure agent which serves as a curability enhancement.
   The structure is such that the protective film agent tightly covers the outer surface of the item, and serves as a protecive layer to protect the item against the rust, soil and damage during the time period in which the item is stored in a storage. This makes it possible to render an outer surface of the protective layer smooth enough to swiftly wipe up the foreign matters or the like which are settled thereon.
   The protective film agent has a withstanding temperature of around 100 degrees Celsius, enough to endure an operating temperature of 70-80 degrees Celsius, to which the protective layer is subjected at the time of implementing the die forging procedure.
   This also improves a flake-resistance and crack-resistance in which the protective layer withstands against an impact, thereby effectively protecting the protective layer against cracks and nicks when the item collide with other member.
   This imparts an improved weather resistance to the protective layer with no perceivable cracks due to the ageing phenomenon. Adjusting the mixing ratio of the urethane-based cure agent makes it possible to determine the Shore's hardness in the range of 70-80 % by weight.
   Since the recoating procedure makes it possible to render the protective layer to be 1.0-1.5 mm in thickness, it is possible to repair the protective layer by overcoating the protective film agent on the item, even if the protective layer is subjected to a damage, breakage, wear or separation. (2) With the protective film agent prepared by simplified constituents of the urethane and the urethane-based cure agent, it is possible to readily mix and adjust the protective film agent with a less cost.
(2) According to other aspect of the invention, the protective film agent is made from a liquid mixture mixed with a curability enhancement. The liquid mixture is prepared by urethane methyl-ethyl ketone and ethyl acetate, while the curability enhancement is prepared by an isocyanate-based compound and ethyl acetate. With the protective film agent prepared by the liquid mixture and the curability enhancement, it is possible to insure the same advantages as mentioned hereinbefore.
(3) According to other aspect of the invention, the liquid mixture has the urethane of 10-30 % by weight, the methyl-ethyl ketone of 35-45 % by weight and the ethyl acetate of 34-45 % by weight. The curability enhancement has the isocyanate-based compound of 2-30 % by weight and the ethyl acetate of 70-98 % by weight. With the protective film agent prepared by these constituents at the certain ratios, it is possible to insure the same advantages as mentioned hereinbefore.
(4) According to other aspect of the invention, the protective layer measures 0.1-3.0 mm in thickness. It is possible to appropriately adjust the thickness of the protective layer by overcoating the protective film agent on the item.
(5) According to other aspect of the invention, the isocyanate-based compound is 2-4-toluene-di-isocyanate. With 2-4-toluene-di-isocyanate selected as the isocyanate-based compound, it is possible to readily procure the isocyanate-based compound as an available and existent substance.
(6) With the mold release agent including a wax layer and previously applied to a regional outer surface of the item to be protected, it is possible to readily remove the protective layer from the item by heating the item to such a degree as to melt the mold release agent. This is true with the case in which the mold release agent is applied to the regional outer surface of the item except for the specified portion of the item.
(7) According to other aspect of the invention, an adhesive sheet is provided over the protective layer at the specified portion of the item.
   At the time of using the die mold, removing the adhesive sheet enables the users to quicky separate the protective layer from the outer surface in which the specified portion of the item resides because the adhesive sheet tightly sticks to the protective layer.
(8) According to a method for forming a protective layer applied to an outer surface of an item to be protected, or applied to a regional outer surface of the item except for a specified portion, so as to form a protective layer, in which the protective film agent is provided by a urethane liquid mixed with a urethane-based cure agent which serves as a curability enhancement. Since the protective film agent is used as prepared above, it is possible to attain the same effects as mentioned at the item (1).
(9) According to the method for forming a protective layer applied to an outer surface of an item to be protected, or applied to a regional outer surface of the item except for the specified portion, in which the protective film agent is provided by a liquid mixture mixed with a curability enhancement, and the liquid mixture prepared by urethane methyl-ethyl ketone and ethyl acetate, and the curability enhancement prepared by an isocyanate-based compound and ethyl acetate.
   The protective film agent is such that it is possible to attain the same effects as mentioned at the item (2).
(10) According to the method for forming a protective layer, in which the liquid mixture includes the urethane of 10-30 % by weight, the methyl-ethyl ketone of 35-45 % by weight and the ethyl acetate of 34-45 % by weight; and the curability enhancement includes the isocyanate-based compound of 2-30 % by weight and the ethyl acetate of 70-98 % by weight.
(11) According to the method for forming a protective layer, the protective layer is formed on an outer surface of a die mold to have a thickness of 0.1-3.0 mm by means of a spray gun. With the use of the spray gun, it is possible to swiftly overcoat the protective film agent with an easy operation.
(12) According to the method for forming a protective layer, the protective film agent is stored by a hermetically sealed tank which is connected to a container in which a diluted liquid is stored, and the diluted liquid is fed vis the container to the protective film agent within the tank to adjust a viscosity of the protective film agent when an electromagnetic valve is energized. This makes it possible to appropriately adjust the viscosity of the protective film agent to maintain the protective layer in a good condition.
(13) According to the method of forming a protective layer, the protective film agent with a relatively high viscosity is stored in a closed type reservoir, and the protective film agent with a relatively low viscosity is selectively stored in an open type reservoir. The closed type reservoir is pressurized by a compressor when the protective film agent is applied on the item from the closed type reservoir.

The method is such that the two types of reservoirs are selectively used depending on the viscosity observed on the protective film agent, thus rendering the protective layer into a high quality product.

### BRIEF DESCRIPTION OF THE DRAWINGS

Preferred forms of the present invention are illustrated in the accompanying drawings in which:
Fig. 1 is a perspective view of a spraying apparatus according to a first embodiment of the invention;
Fig. 2 is a perspective view showing a die mold and a spray gun;
Fig. 3 is a perspective view showing a die mold and a spray gun according to a fifth embodiment of the invention;
Fig. 4 is a perspective view of a spraying apparatus according to a sixth embodiment of the invention; and
Figs. 5 and 6 are schematic views showing a spraying apparatus according to a seventh embodiment of the invention.

### BEST MODE FOR CARRYINGF OUT THE INVENTION

### FIRST EMBODIMENT OF THE INVENTION

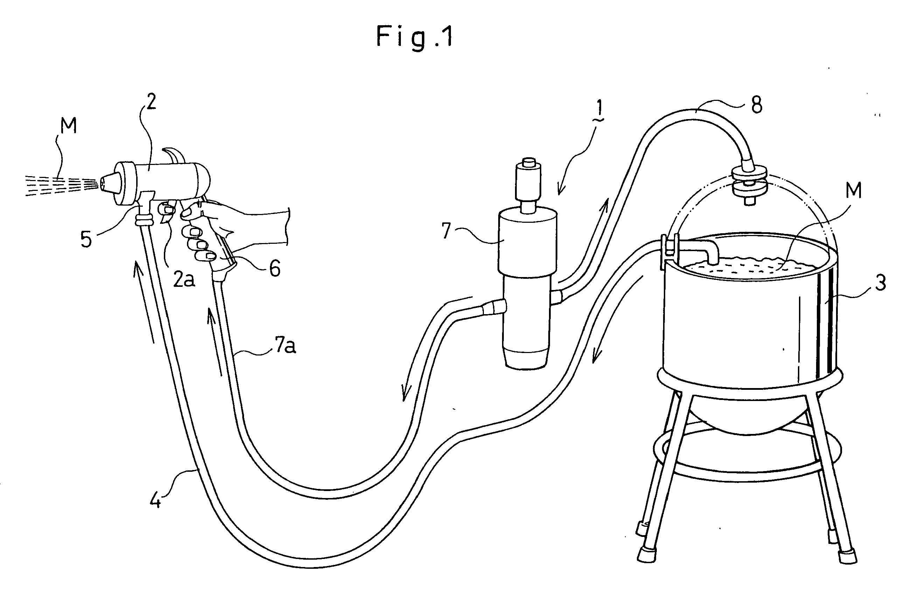

Referring to Fig. 1 which shows a spraying apparatus 1 according to a first embodiment of the invention, a spray gun 2 is provided to inject a protective film agent M in liquid state. A hermetically sealed reservoir 3 stores the protective film agent M in liquid state, and is connected via a suction hose 4 to an inlet 5 of the spray gun 2.

Between an intake canister 6 of the spray gun 2 and the reservoir 3, a pneumatic pump 7 is provided. Between the pneumatic pump 7 and the reservoir 3, a pressure hose 8 is provided to connect therebetween. Between the pneumatic pump 7 and the intake canister 6 of the spray gun 2, a pneumatic hose 7a is provided to connect therebetween.

Upon driving the pneumatic pump 7 as a method of coating a protective film agent M on an item to be protected, the protective film agent M within the reservoir 3 is pressurized through the pressure hose 8, and the outside air is fed via the pneumatic hose 7a to the intake canister 6. The pressurized air compresses the protective film agent M within the reservior 3 to feed the protective film agent M to the spray gun 2 through and the suction hose 4 and the inlet 5.

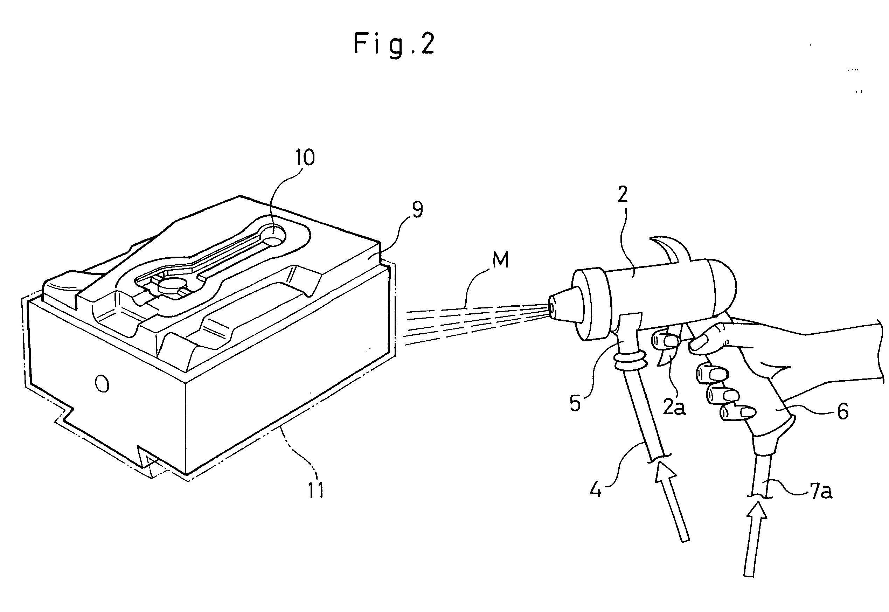

In this instance, pulling a trigger 2a permits the protective film agent M to inject outside together with the pressurized air as shown in Fig. 2. The protective film agent M thus injected is applied to a ferreous die mold 9 as the item to be protected at the time of implementing the die casting or die forging operation. The protective film agent M covers the die mold 9 as a protective layer 11 which measures 0.1-3.0 mm in thickness, so as to protect the die mold 9 against the rust, soil and damage during the time period in which the die mold 9 is stored in the storage.

The protective film agent M is applied entirely to an outer surface of the die mold 9 including a cavity 10, otherwise the protective film agent M is applied to an outer surface of the die mold 9 except for a planar surface which the cavity 10 is situated on the die mold 9.

When the die mold 9 is to be transferred oversea, or the die mold 9 is not to be used for production and kept in the storage, the protective film agent M is applied entirely to the outer surface of the die mold 9 including the cavity 10.

Upon using the die mold 9 to a die casting machine or die forging machine (not shown), the protective layer 11 is removed only from the planar surface in which the cavity 10 is located.

The reason why the protective layer 11 is applied to the outer surface of the die mold 9 except for the portion in which the cavity 11 resides, is as follows:

In the recent workshop in which the die forging or die casting procedure has been implemented for vehicular component parts, a surface treatment (e.g., plating or polishing as a reparative measure) is given to the planar surface in which the cavity 11 resides before implementing the die forging or die casting procedure. The surface treatment obviates the necessity of applying the protective film agent M up to the planar surface in which the cavity 11 resides.

In general, the die mold 9 is loaded to the die casting machine or die forging machine with the die mold 9 covered by the protective layer 11.

Upon preparing the protective film agent M, an appropriate amount of urethane (100 % by weight) is mixed with a urethane-based cure agent which serves as a curability enhancement. Categorically, urethane is a general term of ester which is produced from carbamic acid and a kind of alcohol (phenol), and it means ethyl carbamate in a narrow sense.

The protective layer 11 reacts on the aqueous component of the atmosphere, and is sufficiently cured to have a heat-resistant property in which the protective layer 11 can withstand against the temperature around 100 degrees Celsius. This means that the protective layer 11 can satisfactorily withstand the operating temperature of 70-80 degrees Celsius, to which the protective layer 11 is subjected at the time of implementing the die forging procedure.

The time period in which the protective layer 11 needs to be cured is 40-72 hours (2-3 days) at the normal temperature, although it changes depending on the aqueous component of the atmosphere. With the passage of time, the protective layer 11 is gradually yellowed by month due to the ageing phenomenon.

Despite the protective layer 11 is relatively small in molecular weight and tensile strength, it is possible for the protective layer 11 to maintain a colorable condition, good wear resistance and good tightness against the die mold 9.

With the constituents of the protective film agent M taken into consideration, it is possible to improve a flake-resistance and crack-resistance in which the protective layer withstands against an inadvertent impact, thereby effectively protecting the protective layer 11 against cracks and nicks when accidentally bringing the die mold 9 to collide with a stationary block.

This imparts an improved weather resistance to the protective layer 11 with no perceivable cracks due to the ageing phenomenon. Adjusting the mixing ratio of the urethane-based cure agent makes it possible to determine the Shore's hardness in the range of 70-80.

Since the recoating procedure makes it possible to render the protective layer 11 to be 1.0-1.5 mm in thickness, it is possible to repair the protective layer 11 by overcoating the protective film agent M on the die mold 9, even if the protective layer 11 is subjected to an unanticipated damage, breakage, wear or separation.

In order to insure an appropriate viscosity for the protective film agent M within the reservoir 3, the diluted liquid of methyl-ethyl ketone or ethyl acetate may be added to the protective film agent M so as to render the viscosity adjustable.

Instead of the die mold 9, the protective film agent M may be applied to an outer surface of mechanical component parts in the workshop upon storing them as inventories. The item to be protected may categorically includes facilities and accessories in the workshop in which the protective layer 11 is used to protect the facilities and the accessories against the rust, soil and damage.

In each case, the protective layer 11 is to be removed from the entire outer surface of the mechanical component parts, the facilities and the accessories before they are used. It would be very advantageous to previously overcoat a mold release (e.g., wax layer) as described hereinafter in a fourth embodiment of the invention.

### SECOND EMBODIMENT OF THE INVENTION

In the protective film agent M in a second embodiment of the invention, there is provided a liquid mixture mixed with a curability enhancement. The liquid mixture is prepared by urethane methyl-ethyl ketone and ethyl acetate, and the curability enhancement is prepared by an isocyanate-based compound and ethyl acetate.

The isocyanate-based compound is a general term of the substance in which an isocyanate group is provided, and represented by 2-4-toluene-di-isocyanate. The isocyanate-based compound is generally expressed by R-N=C=O (chemical formula), wherein R represents alkyl or aryl group.

In this instance, it is possible to control the curing speed of the protective layer 11 by adjusting the mixing ratio of the isocyanate-based compound and ethyl acetate.

### THIRD EMBODIMENT OF THE INVENTION

In the protective film agent M in a third embodiment of the invention, the liquid mixture has urethane of 10-30 % by weight, methyl-ethyl ketone of 35-45 % by weight and ethyl acetate of 34-45 % by weight. The curability enhancement has the isocyanate-based compound of 2-30 % by weight and ethyl acetate of 70-98 % by weight.

In the third embodiment of the invention, the mixing ratio of the liquid mixture and that of the curability enhancement are expressed in concrete terms. The mixing ratos may be altered as desired depending on the situation in which the protective film agent M is used and applied.

By way of illustration, the liquid mixture may has urethane of 20-26 % by weight, methyl-ethyl ketone of 37-40 % by weight and ethyl acetate of 37-40 % by weight. The curability enhancement has the isocyanate-based compound of 2-50 % by weight and ethyl acetate of 50-98 % by weight.

With respect to the heat resistance, the curing time period, a tightness, colorable condition, wear resistance and ageing phenomenon under the normal temperature, there is generally no difference in their performance compared with the first embodiment of the invention. As for the molecular weight and tensile strength, they become greater in magnitude compared with those of the first embodiment of the invention.

### FOURTH EMBODIMENT OF THE INVENTION

In the fourth embodiment of the invention, a mold release (e.g., wax layer) is previously overcoated entirely on the outer surface of the die mold 9 as thin as 0.01-0.05 mm in thickness before the protective film agent M is applied.

In this instance, it is possible to readily remove the protective layer 11 from the die mold 9 by heating the die mold 9 to such a degree as to melt the mold release agent.

This is true with the case in which the mold release agent is applied to the outer surface of the die mold 9 except for the planar surface in which the cavity 10 is located. Instead of the the wax layer, the lubricant oil or solid grease may be used.

### FIFTH EMBODIMENT OF THE INVENTION

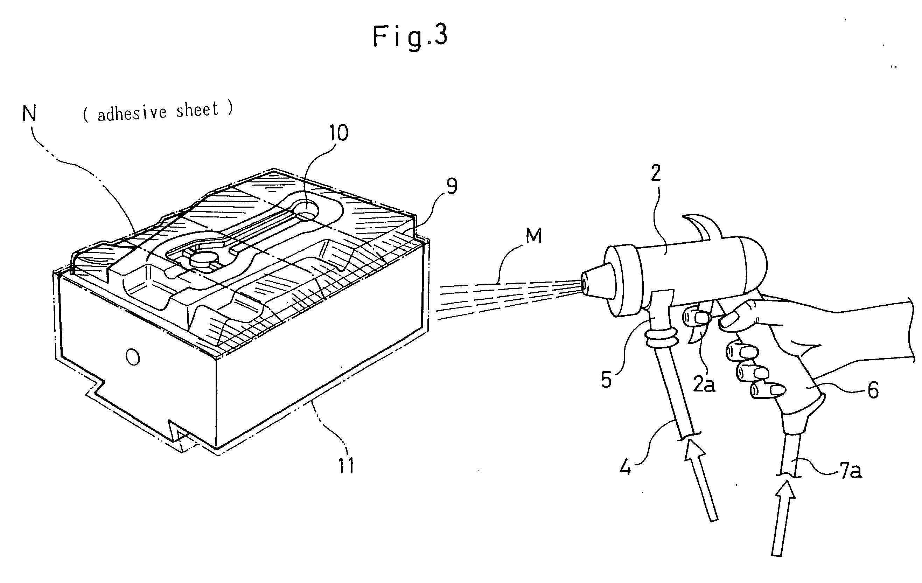

In a fifth embodiment of the invention, an adhesive sheet N (e.g., a duct tape) is provided over the protective layer 11 at the planar surface in which the cavity 10 resides as shown in Fig. 3.

At the time of using the die mold 9, removing the adhesive sheet N enables the users to quicky separate the protective layer 11 from the planer surface in which the cavity 10 resides because the adhesive sheet N tightly sticks to the protective layer 11.

The adhesive sheet N may be made from a plastic film, cloth, paper, aluminum foil (metallic foil). Instead of the adhesive sheet N, a simple sheet my be provided to wrap the portion in which the die mold 9 defines the cavity 10, and a duct tape is used to provisionally bind the sheet to the die mold 9.

### SIXTH EMBODIMENT OF THE INVENTION

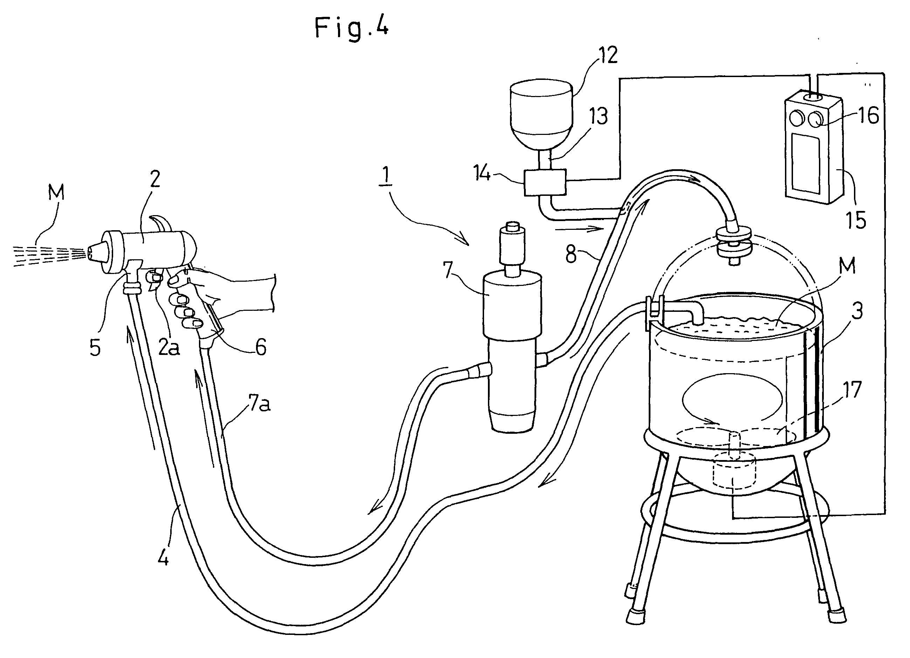

In a sixth embodiment of the invention, a container 12 is annexed to the spraying apparatus 1 as shown in Fig. 4. The container 12 is provided to appropriately adjust the viscosity of the protective film agent M within the hermetically sealed reservoir 3. The container 12 has a diluted liquid such as methyl ketone and ethyl acetate, and is connected to the pressure hose 8 through a connection hose 13 and an electromagnetic valve 14.

Upon operating the apparatus 1, a button 16 on a panel 15 is activated depending on the observed viscosity of the protective film agent M which is injected by the spray gun 2. Once the button 16 is activated, the electromagnetic valve 14 is energized to open its blade valve, while at the same time, driving a pulsator 17 rotationally provided within the reservoir 3.

The energized electromagnetic valve 14 permits the diluted liquid to flow into the reservoir 3 from connection hose 13 to the pressure hose 8. The diluted liquid flowed into the reservoir 3 is mixed with the protective film agent M, and stirred by the pulsator 17 to render the protective film agent M to have an appropriate viscosity.

### SEVENTH EMBODIMENT OF THE INVENTION

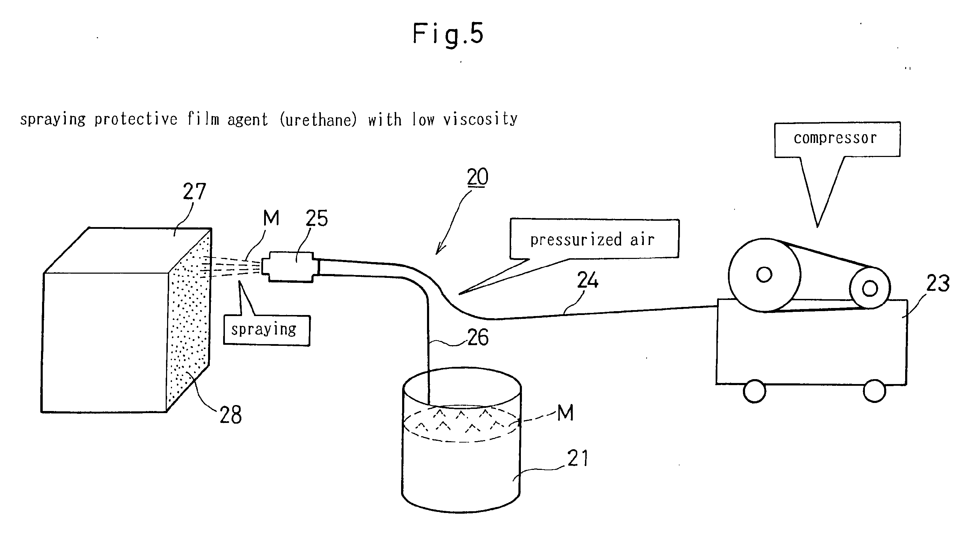

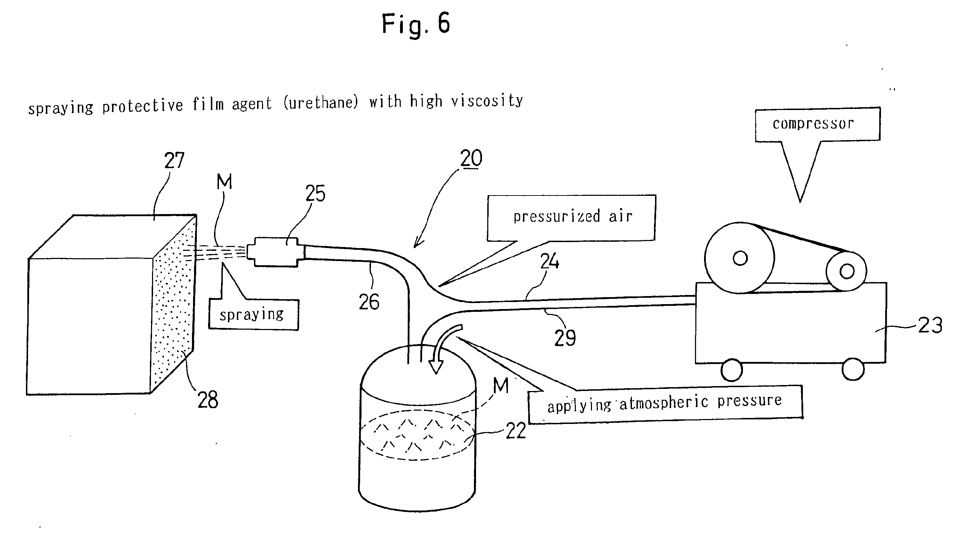

In a seventh embodiment of the invention, an open type reservoir 21 and a closed type reservoir 22 are provided in a spraying apparatus 20 as shown in Figs. 5 and 6. These reservoirs 21, 22 are selectively employed depending on the viscosity observed on the protective film agent M.

Upon using the protective film agent M with a relatively low viscosity as shown in Fig. 5, the protective film agent M is stored in the open type reservoir 21, and a compressor 23 feeds a pressurized air via a pneumatic pipe 24 to a spray gun 25. During the air-feeding process, a spray pipe 26 draws the protective film agent M into the spray gun 25 by means of a vaccum pressure.

Then, the spray gun 25 injects the protective film agent M together with the pressurized air toward an item 27 to be protected, whereby forming a protective layer 28 on an surface of the item 27.

Upon using the protective film agent M with a relatively high viscosity as shown in Fig. 6, the protective film agent M is stored in the closed type reservoir 22. Between the closed type reservoir 22 and the compressor 23, a pressure pipe 29 is provided to connect therebetween. Upon driving the compressor 23, the reservoir 22 is pressurized to feed the protective film agent M to the pray gun 25 through the spray pipe 26.

In the seventh embodiment of the invention, the reservoirs 21, 22 are selectively used depending on the viscosity observed on the protective film agent M, thus rendering the protective layer 28 into a high quality product.

### MODIFICATION FORMS

The die mold 9 may be made from mild steel or stainless steel, not confined to the ferreous material.

Upon implementing the surface treatment on the die mold 9, it is possible to directly dip the die mold 9 into a plating bath with the protective layer 11 coated on the die mold 9.

Diluting the protective film agent M makes it possible to reduce its viscosity, and thus easing the spraying work with a good finish. This means to render the viscosity of the protective film agent M adjustable depending on the item to be protected.

After applying the protective film agent M to the die mold 9, infrared rays may be applied to the die mold 9 so as to shorten the drying time period, while at the same time, making it easy to overcoat the protective film agent M on the die mold 9.

The protective film agent M may be used not only to domestic appliances and a variety of utensiles, but also to bicycles, motorbikes and passenger cars. The protective film agent M may be further employed to a variety of other products insomuch as required to protect them against the rust, soil and damage during the time period in which the products is stored.

### INDUSTRIAL APPLICABILITY

A protective film agent is applied to an outer surface of an item to be protected, or applied to an outer surface of the item except for a specified portion of the item. The protective film agent has a liquid mixture mixed with a curability enhancement. The liquid mixture is prepared by urethane methyl-ethyl ketone and ethyl acetate, and the curability enhancement is prepared by an isocyanate-based compound and ethyl acetate. The protective film agent tightly covers the outer surface of the item so as to protect them against the rust, soil and damage during the time period in which the item is stored. With the simplified combination of urethane and the urethane-based cure agent, it is possible to form the protective film agent at a low cost, thus contributing the protective film agent to the manufacturing industries through the distribution of the component parts.

## Claims

1. A protective film agent applied to an outer surface of an item to be protected, or applied to a regional outer surface of said item except for a specified portion, so as to form a protective layer,
said protective film agent comprising:
a urethane liquid mixed with a urethane-based cure agent which serves as a curability enhancement.

2. The protective film agent applied to an outer surface of an item to be protected, or applied to a regional outer surface of said item except for a specified portion,
a liquid mixture mixed with a curability enhancement;
said liquid mixture prepared by urethane methyl-ethyl ketone and ethyl acetate, and said curability enhancement prepared by an isocyanate-based compound and ethyl acetate.

3. The protective film agent according to claim 2, wherein said liquid mixture includes said urethane of 10-30 % by weight, said methyl-ethyl ketone of 35-45 % by weight and said ethyl acetate of 34-45 % by weight; and said curability enhancement includes said isocyanate-based compound of 2-30 % by weight and said ethyl acetate of 70-98 % by weight.

4. The protective film agent according to claims 1, said protective layer measures 0.1-3.0 mm in thickness.

5. The protective film agent according to claim 3, wherein said isocyanate-based compound is 2-4-toluene-di-isocyanate.

6. The protective film agent according to claim 1, wherein a mold release agent including a wax layer and previously applied to said outer surface of said item to be protected, or applied to a regional outer surface of said item except for said specified portion;

7. The protective film agent according to claim 1 or 2, wherein an adhesive tape is separably provided over said specified portion of said item.

8. A method for forming a protective layer applied to an outer surface of an item to be protected, or applied to a regional outer surface of said item except for a specified portion, so as to form a protective layer, in which said protective film agent provided by a urethane liquid mixed with a urethane-based cure agent which serves as a curability enhancement.

9. A method for forming a protective layer applied to an outer surface of an item to be protected, or applied to a regional outer surface of said item except for a specified portion, in which said protective film agent is provided by a liquid mixture mixed with a curability enhancement, and said liquid mixture prepared by urethane methyl-ethyl ketone and ethyl acetate, and said curability enhancement prepared by an isocyanate-based compound and ethyl acetate.

10. The method for forming a protective layer according to claim 9, wherein said liquid mixture includes said urethane of 10-30 % by weight, said methyl-ethyl ketone of 35-45 % by weight and said ethyl acetate of 34-45 % by weight; and said curability enhancement includes said isocyanate-based compound of 2-30 % by weight and said ethyl acetate of 70-98 % by weight.

11. The method of forming a protective layer according to claim 8 or 9, said protective layer is formed on an outer surface of a die mold to have a thickness of 0.1-3.0 mm by means of a spray gun.

12. The method of forming a protective layer according to claim 8 or 9, wherein said protective film agent is stored by a hermetically sealed tank which is connected to a container in which a diluted liquid is stored, and said diluted liquid is fed vis said container to said protective film agent within said tank to adjust a viscosity of said protective film agent when an electromagnetic valve is energized.

13. The method of forming a protective layer according to claim 8 or 9, wherein the protective film agent with a relatively high viscosity is stored in a closed type reservoir, and the protective film agent with a relatively low viscosity is selectively stored in an open type reservoir, and said closed type reservoir is pressurized by a compressor when said protective film agent is applied by using said closed type reservoir.
